(19) Europäisches Patentamt
European Patent Office
Office européen des brevets

(11) EP 2 492 842 A1

(12) EUROPÄISCHE PATENTANMELDUNG

(43) Veröffentlichungstag:
29.08.2012 Patentblatt 2012/35

(51) Int Cl.:
G06K 9/00 (2006.01)

(21) Anmeldenummer: 12156811.7

(22) Anmeldetag: 24.02.2012

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(30) Priorität: 25.02.2011 DE 102011000929

(71) Anmelder: Vitracom AG
76133 Karlsruhe (DE)

(72) Erfinder:
• Link, Prof. Dr. Norbert
76187 Karlsruhe (DE)
• Wetzel, Claus
76228 Karlsruhe (DE)

(74) Vertreter: Geitz Truckenmüller Lucht
Patentanwälte
Kriegsstrasse 234
76135 Karlsruhe (DE)

(54) **Verfahren zur Optimierung des Einsatzes von Betriebsmitteln in einer Dienstleistungsumgebung**

(57)     In vielfältigen Situationen sollen bei verschiedensten Dienstleistungsumgebungen, wie beispielsweise in Supermärkten, jeweils erforderliche Betriebsmittel möglichst effektiv eingesetzt werden, um keine Überkapazitäten vorzuhalten, aber auch zu lange Wartezeiten zu vermeiden. Es ist hierzu bekannt, Zuströme und Abströme der Dienstleistungsumgebung zu beobachten, um hieraus auf künftige Anforderungen an die Betriebsmittel zu schließen. Die Erfindung soll bekannte Verfahren verbessern und deren Genauigkeit und Effizienz steigern.

Dies gelingt durch eine Unterteilung der Dienstleistungsumgebung in einen Vorlaufbereich und einen Abfertigungsbereich, sowie die zusätzliche Überwachung des Zustroms von dem Vorlauf- in den Abfertigungsbereich. Hierdurch kann eine deutlich genauere Vorhersage über die Anforderungen an die Betriebsmittel gemacht werden, die in dem Abfertigungsbereich bereitgehalten werden müssen.

Fig. 1

EP 2 492 842 A1

**Beschreibung**

Die vorliegende Erfindung betrifft ein Verfahren zur Optimierung des Einsatzes von Betriebsmitteln in einer Dienstleistungsumgebung, wobei die Betriebsmittel bei deren Verlassen erfordert werden und wobei ein Zustrom $j_V$ sowie ein Abstrom $j_o$ in die Dienstleistungsumgebung bzw. aus ihr heraus mithilfe elektronischer Erfassungsmittel erfasst und die so ermittelten Daten einer Auswerteeinheit zugeführt werden, welche anhand der von den Erfassungsmitteln zu einem Zeitpunkt ermittelten Daten einen späteren Bedarf an Betriebsmitteln abschätzt.

Ein derartiges Verfahren ist bereits aus der Übersetzung der europäischen Patentschrift EP 0 772 837 B1, der DE 695 05 137 T2, vorbekannt. Gegenstand dieser Schrift ist ein Kassen-Überwachungssystem, welches in Supermärkten und ähnlichen Einrichtungen Verwendung finden kann. Ein solcher Supermarkt stellt ebenfalls eine Dienstleistungsumgebung dar, bei deren Verlassen Betriebsmittel in Form von Kassen vorgehalten werden müssen. Plastisch zeigt dieses Beispiel, dass ein Optimum dieser Betriebsmittel erreicht werden sollte, so dass einerseits auf der Kostenseite nicht zu viel Personal zur Verfügung gehalten werden muss, andererseits aber die Warteschlangen vor den Kassen nicht zu stark anwachsen.

Ziel des Gegenstandes der genannten Schrift ist es also, eine möglichst exakte Abschätzung zu leisten, wann wie viele Kassen geöffnet sein müssen, um die Länge der Warteschlangen nicht zu stark anwachsen zu lassen und die Kunden durch zulange Wartezeiten zu verärgern. Hierzu sieht die genannte Schrift vor, dass im Eingangsbereich des Supermarktes eine Überwachung mithilfe von Erfassungsmitteln durchgeführt wird, welche einerseits die Anzahl der eintretenden Personen erfassen und andererseits gleichzeitig eine Klassifikation vornehmen, um welche Art von Personen es sich handelt, also um Erwachsene, Kinder, gegebenenfalls auch Tiere und ob andere Objekte wie beispielsweise Einkaufswagen mitgeführt werden. Im Beispiel der genannten Schrift wird hierzu ein Höhenprofil der eintretenden Personen erstellt und mit einer gewissen Wahrscheinlichkeit davon ausgegangen, dass es sich bei bestimmten Charakteristika der Höhenprofile um Käufer handelt. Sodann wird davon ausgegangen, dass jeder Käufer eine zufällig festgelegte Anzahl von Produkten erwirbt und hierfür eine sich daraus ableitende, ebenfalls zufällige Zeit benötigt, bevor der Käufer sich zur Kasse begibt. Abschließend wird beim Verlassen des Supermarktes ebenfalls gemessen, wie viele Personen und zu welchen Zeiten den Supermarkt verlassen.

Eine im wesentlichen gleich funktionierende Anordnung sieht die deutsche Patentanmeldung DE 10 2006 000 495 A1 vor, welche jedoch im Hinblick auf die Personenerkennung anstelle der Anfertigung eines Höhenprofils eine dreidimensionale Videoaufzeichnung anfertigt, welche mithilfe einer Auswerteeinheit bearbeitet wird.

Diese Schriften des Standes der Technik haben jedoch gemeinsam, dass sowohl der Zustrom als auch der Abstrom in bzw. aus dem Supermarkt heraus überwacht wird, die Frage, nach welcher Zeit ein Kunde tatsächlich die zur Verfügung stehenden Kassen in Anspruch nimmt, jedoch abgeschätzt werden muss. Hierzu sind statistische Annahmen zu treffen, von denen die Realität ohne Weiteres abweichen kann. Eine Rückkopplung der tatsächlichen Ergebnisse im Sinne eines Reglers wird hierbei jedoch nicht vorgenommen. Dies führt zu einer gewissen Ungenauigkeit des Systems, ebenso wie zu einer Unflexibilität bei von der statistischen Norm abweichendem Einkaufsverhalten zu bestimmten Zeitpunkten.

Der vorliegenden Erfindung liegt daher die Aufgabe zu Grunde, die Genauigkeit der Vorhersage des Bedarfs an Betriebsmitteln in einer Dienstleistungsumgebung zu verbessern.

Dies gelingt durch ein Verfahren zur Optimierung des Einsatzes von Betriebsmitteln in einer Dienstleistungsumgebung gemäß den Merkmalen des Hauptanspruchs. Weitere sinnvolle Ausgestaltungen dieses Verfahrens können den Unteransprüchen entnommen werden.

Wesentlicher Teil der Verbesserung der bekannten Systeme durch die Erfindung ist ein Aufteilen der Dienstleistungsumgebung in einen so genannten Vorlaufbereich und einen so genannten Abfertigungsbereich. Bei einem Eintreten der Benutzer bzw. Kunden in den Abfertigungsbereich kann davon ausgegangen werden, dass nunmehr die Betriebsmittel in Anspruch genommen werden sollen, was während des Aufenthaltes im Vorlaufbereich noch nicht der Fall ist. Neben einer Überwachung des Zustroms $j_V$ in den Vorlaufbereich, wie bereits im Stand der Technik geschehen, wird gemäß der Erfindung auch der Zustrom $j_A$ aus dem Vorlaufbereich in den Abfertigungsbereich gemessen, wofür wiederum geeignete Erfassungsmittel vorgehalten werden. Darüber hinaus erfolgt eine Überwachung der Länge L einer Warteschlange, welche sich vor den Betriebsmitteln bildet.

Durch eine derartige Unterteilung der Dienstleistungsumgebung in einen Vorlaufbereich und einen Abfertigungsbereich ist es ermöglicht, exakte Erhebungen über die Durchlaufzeiten $\tau_V$ der Nutzer durch den Vorlaufbereich anzustellen. Hierdurch muss nicht mehr eine Gesamtabschätzung in der Dienstleistungsumgebung angestellt werden, welche gleichzeitig die Abfertigung und die Wartezeiten vor der Abfertigung mit einschließt. Ferner kann die aktuelle Länge L der Warteschlange mit in Betracht gezogen werden, so dass hierüber ein Ist-Zustand abgeleitet werden kann, welcher die Länge L der Warteschlange und den Zustrom $j_A$ zum Abfertigungsbereich mit einschließt. Aufgrund dieser Ist-Wert-Erfassung und einer gleichzeitigen Abschätzung über zukünftige Werte, welche im Folgenden näher erläutert werden, ist es daher möglich, eine Regelung aufzubauen, welche als Vorgabe eine Minimierung einer Kostenfunktion ergeben soll, welche als Parameter die höchste, akzeptable Warteschlangenlänge L bzw. eine entsprechende Wartezeit T umfasst. Es ist hierdurch eine sehr exakte Abschätzung des tatsächlichen Bedarfs an Betriebsmitteln für die nähere Zukunft ermöglicht.

Es ist vorgesehen, dass ein solches System als Zustandsgrö-βen den Zustrom $j_A$ zum Abfertigungsbereich, die Länge L der Warteschlange sowie die Größe des Abstroms $j_O$ aufweist. Aufgrund eines Vergleichs dieser Zustandsgrößen zum aktuellen Zeitpunkt gemäß einer permanent durchgeführten Messung mit einer Abschätzung für zukünftige Werte kann ein Trend ermittelt werden, anhand dessen eine Auswerteeinheit, welcher sämtliche Daten zugeleitet werden, eine Vorgabe für das zusätzliche zur Verfügung Stellen oder Abziehen von Betriebsmitteln aussprechen kann. Zur Vertiefung der Daten, anhand deren ein Trend ermittelt werden kann, können mehrere für Zeitpunkte in unterschiedlich ferner Zukunft ermittelte Werte wiederum miteinander verglichen werden.

Wie bereits angedeutet, unterliegt die Entscheidung, weitere Betriebsmittel zur Verfügung zu stellen oder Betriebsmittel abzuziehen, einer Kosten-Nutzen-Überlegung. Einerseits sollen nicht zu viel Personalkosten beim Bedienen der Betriebsmittel entstehen, andererseits soll die Warteschlangenlänge (bzw. die Wartezeit) zur Vermeidung von Verärgerung bei den Benutzern nicht zu lang werden. Es ist hierzu vorgesehen, den optimalen Wert der Anzahl der zur Verfügung zu stellender Betriebsmittel $\hat{N}_B$ über eine Minimierung der folgenden Kostenfunktion zu bestimmen:

$$\hat{N}_B : K\left(\hat{N}_B\right) = \min\left(K\left(N_B, j_A, j_O, L, \vec{z}\right)\right)$$

wobei der Wert der möglichen eingesetzten Betriebsmittel $N_B$ ist und der Vektor $\overline{Z}$ eine Kombination von Randbedingungen darstellt, wie beispielsweise eine mindeste zur-Verfügungs-Stellungs-Dauer eines Betriebsmittels. Eine reine Regelung nur aufgrund des momentan gemessenen Zustandes, also des momentanen Zustroms $j_A$, des momentanen Abstroms $j_O$ und der momentanen Länge L der Warteschlange, würden aufgrund von deren starken, kurzzeitigen Schwankungen zu unvertretbar hohen Schwankungen beim Öffnen und Schließen von Schaltern bzw. Kassen führen, was weder wirtschaftlich, noch im Falle der Verwendung eines solchen Verfahrens in einem Supermarkt für das Schalterpersonal oder auch die abzufertigenden Personen zumutbar wäre.

Um dies zu vermeiden, wird die oben angesprochene, vorausschauende Regelung erfordert, welche Änderungen dahingehend bewertet, ob diese zu neuen Zuständen führen, die für relevante Zeiträume persistent oder lediglich kurzzeitig transient sind. Sofern ein solcher Trend also als nicht persistent angesehen wird, wird man von einer Änderung der Anzahl zur Verfügung gestellter Betriebsmittel absehen.

Die Bildung von Warteschlangen und die damit verbundene Wartezeit ergeben sich aus Zustrom $j_A$ und Abstrom $j_O$, wobei der Abstrom vom spezifischen Abstrom je Betriebsmittel und der Anzahl der eingesetzten Betriebsmittel abhängt. Sind die spezifischen Abströme und der Zustrom bekannt, kann also die minimale Anzahl der Betriebsmittel bestimmt werden, um die Überschreitung einer Warteschlangelänge bzw. Wartezeit zu verhindern. Die vorausschauende Regelung benötigt daher für die Vorhersage des Bedarfs auch eine Vorhersage der Zuströme und der spezifischen Abströme.

Die Grundlage für die Vorhersage des Zustroms $j_A$ zum Abfertigungsbereich bildet der Zustrom zum Vorlaufbereich, da der Zustrom in den Vorlaufbereich erst mit einer Verzögerung im Abfertigungsbereich erscheint. Somit kann aus einer Messung des Zustroms zum Vorlaufbereich eine Vorhersage des Zustroms zum Abfertigungsbereich getätigt werden.

Um eine möglichst exakte Vorhersage des Zustroms $j_A$ zum Abfertigungsbereich vorhersagen zu können, ist eine möglichst gute Abschätzung erforderlich, wie lange die Durchlaufzeit $\tau_v$ in dem Vorlaufbereich im Einzelfall wehrt. Für eine derartige Vorhersage wird eine Wahrscheinlichkeitsdichtefunktion $p(\tau_v)$ ermittelt, wobei $\tau_v$ die Verweildauer in den Vorlaufbereich darstellt. Für die Ermittlung einer derartigen Wahrscheinlichkeitsdichtefunktion $p(\tau_v)$ sind verschiedene Vorgehensweisen denkbar. Sofern von kontinuierlichen Zuströmen $j_v$ in den Vorlaufbereich und $j_A$ in den Abfertigungsbereich ausgegangen werden kann, ist der Zustrom $j_A$ in den Abfertigungsbereich eine Faltung aus dem Zustrom $j_v$ in den Vorlaufbereich und der zu ermittelnden Wahrscheinlichkeitsdichtefunktion $p(\tau_v)$. Es gilt also

$$j_A = \int_{-\infty}^{+\infty} j_V(t - \tau_V) p(\tau_V) d\tau_V \quad \text{bzw.} \quad j_A = j_V \otimes p(\tau_V)$$

Es kann daher nach $p(\tau_v)$ durch Entfaltung aufgelöst werden. Gemäß dem Wiener-Khinchin-Theorem ist die Fourier-Transformierte der Faltung gleich dem Produkt der Fourier-Transformierten der Faltungstherme:

$$F\{j_A\}=F\{j_V \otimes p\}=F\{j_V\}\cdot F\{p\}$$

Diese Gleichung lässt sich nach F{p} auflösen. P ergibt sich dann durch inverse Fourier-Transformation aus F{p}.

$$F\{p\}=\frac{F\{j_V\}}{F\{j_E\}}; p = F^{-1}\{F\{p\}\}$$

Voraussetzung ist, dass $F\{j_E\}$ keine Nullstellen besitzt und $j_A$ und $j_V$ rauschfrei sind. Andernfalls ist ein Wiener-Filter anzuwenden, der die beste Wahrscheinlichkeitsdichtefunktion in dem Sinne liefert, dass die mittlere quadratische Abweichung zwischen beobachteten $j_A$ und dem Faltungsergebnis minimal ist. Wenn $v_j$ das Rauschen der Ströme bezeichnet, dann lautet die Wiener-Formel:

$$F\{p\}=\frac{F^*\{j_A\}\cdot F\{j_V\}}{|F\{j_A\}|^2 F\{j_V\}+F\{v_j\}}$$

Handelt es sich jedoch um diskrete Zuströme $j_V$ in den Vorlaufbereich und $j_A$ in den Abfertigungsbereich, so stellt sich die Berechnung grundsätzlich anders dar. Werden diese Ströme $j_A$ und $j_V$ zu diskreten Zeiten bestimmt und genügt es, die Wahrscheinlichkeitsdichtefunktion ebenfalls nur zu diskreten Zeiten und in einem endlichen Intervall zu ermitteln, kann dies durch Lösen eines linearen Gleichungssystems erfolgen. Sowohl die Abtastung der Ströme $j_A$ und $j_V$, als auch die Diskretisierung der Wahrscheinlichkeitsdichtefunktion erfolgt in gleichförmigen Intervallen $\Delta$. Der Ausgangsstrom zu einer vergangenen Zeit ergibt sich nun als diskrete Faltung des Eingangsstromes mit der Wahrscheinlichkeitsdichtefunktion. Mit

$$\tau_i = i \cdot \Delta$$

Ergeben sich die Gleichungen

$$j_A(t_0)=\sum_{i=0}^{N} j_V(t_0 - \tau_i)p(\tau_i)$$

$$j_A(t_0 - \Delta)=\sum_{i=0}^{N} j_V(t_0 - \Delta - \tau_i)p(\tau_i)$$

$$\vdots$$

$$j_A(t_0 - N\Delta)=\sum_{i=0}^{N} j_V(t_0 - N\Delta - \tau_i)p(\tau_i)$$

welche sich als lineares Gleichungssystem wie folgt schreiben lassen:

$$\begin{bmatrix} j_A(t_0) \\ j_A(t_0 - \Delta) \\ \vdots \\ j_A(t_0 - N\Delta) \end{bmatrix} = \begin{bmatrix} j_V(t_0 - \tau_0) & j_V(t_0 - \tau_1) & \cdots & j_V(t_0 - \tau_N) \\ j_V(t_0 - \Delta - \tau_0) & & & \\ \vdots & & \ddots & \\ j_V(t_0 - N\Delta - \tau_0) & & & j_V(t_0 - N\Delta - \tau_N) \end{bmatrix} \begin{bmatrix} p(\tau_0) \\ p(\tau_1) \\ \vdots \\ p(\tau_N) \end{bmatrix}$$

Geht man noch weiter in die Vergangenheit zurück, entsteht ein überbestimmtes lineares Gleichungssystem, das sich mithilfe der Singulärwertzerlegung lösen lässt.

Eine weitere Möglichkeit zur Ermittlung der Wahrscheinlichkeitsdichtefunktion $p(\tau_v)$ liegt darin, eine entsprechende Funktion vorab durch Messung zu bestimmen. Eine Möglichkeit hierzu besteht darin, dass kodierte Tags verwendet werden, welche bei der Erfassung des Zustroms $j_v$ in den Vorlaufbereich und bei der Erfassung des Zustroms $j_A$ in den Abfertigungsbereich ausgelesen werden. Als Tags können z. B. die MAC-Adressen von Bluetooth-aktivierten Mobiltelefonen, aber auch andere beispielsweise an Kunden eines Supermarktes zu verteilende Tags, etwa auch in Form von Einkaufswagenchips oder in die Einkaufswägen eingearbeiteten Tags verwendet werden. Nachdem es auch möglich ist, das vorliegende Verfahren in anderen Dienstleistungsumgebungen wie beispielsweise in einer Serverumgebung einzusetzen, ist in diesem Fall die Messung der Wahrscheinlichkeitsdichtefunktion sinnvoll, da jede auf einem Serversystem vorgenommene Operation mit der individuellen Adresse des Nutzerrechners verknüpft ist. Zu den Möglichkeiten einer Umsetzung der vorliegenden Erfindung auf einem Serversystem wird auf die zugehörigen Erläuterungen weiter unten verwiesen.

Soweit die Wahrscheinlichkeitsdichtefunktion gemessen werden soll, so bietet es sich hierbei an, aufgezeichnete Zeitverläufe der Zuströme $j_v$ zum Vorlaufbereich und $j_A$ zum Abfertigungsbereich zu verwenden. Wie bereits erwähnt, ist der Verlauf des Zustroms $j_A$ zum Abfertigungsbereich eine Faltung des Zustroms $j_v$ am Zugang zum Vorlaufbereich mit der gesuchten Wahrscheinlichkeitsdichtefunktion. Letztere kann also durch eine mathematische Entfaltungsoperation und aus den aufgezeichneten Verläufen von $j_A$ und $j_v$ bestimmt werden. Alternativ kann eine parametrisierte Funktion (z.B. log-Normalverteilung) als Modell der Wahrscheinlichkeitsdichtefunktion angenommen und die Parameter so bestimmt werden, dass die Differenz des Zustroms $j_A$ zum Abfertigungsbereich mit der durch Faltung des Vorlaufbereich-Zustrom-Verlaufs mit dieser Modellfunktion minimal wird. In beiden Fällen resultiert ein Modell der Wahrscheinlichkeitsdichtefunktion für die betrachtete Abfertigungssituation, die für die Voraussage Verwendung findet.

Die Ströme werden durch Raten charakterisiert. Im folgenden werden diese Raten durch das Symbol j bezeichnet mit einem Index, welcher den so charakterisierten Strom bezeichnet. Die Rate des Zustroms zum Abfertigungsbereich wird folglich mit $j_A$ bezeichnet. Da die Rate also die Größe des Zustroms angibt, wird im Folgenden der Begriff Zustrom synonym für die Zustromrate verwendet. Das Gleiche gilt analog für den Abstrom. Die oben gemachten Ausführungen über den Zustrom zum Vorlaufbereich, den Zustrom zum Abfertigungsbereich und die Durchlaufzeitverteilung gelten in diesem Sinne auch für die zugehörigen Raten.

Naturgemäß ist der Zustrom eine stochastisch schwankende Größe, welche mit einer Poisson-Verteilung modellhaft abgeschätzt werden kann, die durch die Zustromrate $j_v$ charakterisiert ist. Aufgrund der Berechnungsformel

$$P(n) = \frac{e^{-j_V \cdot \Delta t} (j_V \cdot \Delta t)^n}{n!}$$

bestimmt sich hierdurch eine Wahrscheinlichkeit für Zugangsereignisse innerhalb eines Zeitintervalls $\Delta t$. Die Poisson-Verteilung an sich wird aufgrund von Erfahrungswerten, welche vorab gesammelt werden, erstellt.

Die Raten sind üblicherweise nicht konstant, sondern folgen einem zeitlichen Verlauf. Die Prozesse sind dann instationäre Poisson-Prozesse, d.h. der Zu- bzw. Abstrom ist über die Zeit veränderlich.

Desgleichen ist die Durchlaufzeit durch den Vorlaufbereich i.A. eine stochastische Größe, welche durch die bereits diskutierte Wahrscheinlichkeitsdichtefunktion charakterisiert ist.

In Folge ist der Zustrom zum Abfertigungsbereich ebenfalls wieder ein stochastischer Prozess, der durch eine Poisson-verteilung mit der Rate $j_A$ beschrieben werden kann.

$$p(n) = \frac{e^{-j_A \cdot \Delta t} \left(j_A \cdot \Delta t\right)^n}{n!}$$

Die Zeitdauern im Abfertigungsbereich sind ebenfalls Ergebnis eines stochastischen Prozesses, welcher wiederum durch die kumulierte Abstromrate aller Betriebsmittel $j_o$ beschrieben wird.

Mithilfe der Warteschlangentheorie lässt sich z.B. der Erwartungswert der Warteschlangenlänge und der Wartezeit sowie deren Varianzen aus $j_A$ und $j_o$ berechnen. Somit kann für vorgegebene, gewünschte Wahrscheinlichkeiten des Einhaltens einer gegebenen Länge L der Warteschlange oder Wartezeit T die minimale Anzahl der benötigten Betriebsmittel bestimmt werden.

Der wesentliche Aspekt der Erfindung ist die Vorhersage des Bedarfs bei sich ändernden Strömen, bei denen also die Zuströme und deren Raten einem zeitlichen Verlauf folgen. Wie bereits ausgeführt, kann der Zustrom zum Abfertigungsbereich $j_A$ aus dem gemessenen Zustrom zum Vorlaufbereich $j_v$ und der Durchlaufzeit-Wahrscheinlichkeitsdichtefunktion $p(\tau_v)$ vorhergesagt werden. Im Allgemeinen ist auch der der spezifische Abstrom $j_o$ je Betriebsmittel eine stochastisch schwankende Größe mit einer zeitlich veränderlichen Rate. Wird zusätzlich der Abstrom vorhergesagt, kann gemäß der oben vorgestellten Methode z.B. mithilfe der Warteschlangentheorie die zukünftige minimale Anzahl der benötigten Betriebsmittel vorhergesagt werden.

Die Vorhersage des Zustroms zum Abfertigungsbereich $j_A$ aus dem gemessenen Zustrom zum Vorlaufbereich $j_v$ und der Durchlaufzeit-Wahrscheinlichkeitsdichtefunktion $p(\tau_v)$ unterliegt jedoch einer grundsätzlichen Beschränkung. Aufgrund der zum aktuellen Zeitpunkt gemessenen Zuströme $j_v$ ist eine Berücksichtigung derselben für die Vorhersage des Zustroms $j_A$ mit hinreichender Sicherheit nur bis zu einer minimalen Durchlaufzeit durch den Vorlaufbereich gewährleistet. Eine Vorhersage von $j_A$ aus den gemessenen Werten von $j_v$ mithilfe der Wahrscheinlichkeitsdichtefunktion der Durchlauf zeit $\tau_v$ wird nur bis zum kleinsten Wert der Durchlaufzeit $\tau_{v,min}$ hinreichend gestützt. Derart vorausgesagte Werte über diese minimale Durchlaufzeit $\tau_{v,min}$ hinaus sind mit wachsender Vorhersagezeit immer weniger sicher, bis eine maximale Durchlaufzeit $\tau_{v,max}$ als Vorhersagezeit erreicht ist, ab der die Vorhersage überhaupt nicht mehr durch die Messung gestützt wird. Um darüber hinaus gehende künftige Zuströmereignisse ebenfalls berücksichtigen zu können, wird eine Vorhersage anhand von Erfahrungsmodellen betreffend den Zustrom zum Vorlaufbereich $j_v$ und der Durchlaufzeit-Wahrscheinlichkeitsdichtefunktion $p(\tau_v)$ gemacht.

Die Modellierung des zeitlichen Gangs der Ströme ist dann angebracht, wenn diese unter ähnlichen Bedingungen ähnliche Verläufe darstellen. Dies ist typischerweise für Systeme mit festen Öffnungs- und Schließzeiten oder bei Systemen, die mit Menschen interagieren, der Fall, wo sich charakteristische Tagesverläufe etwa in Abhängigkeit des Wochentages oder etwa saisonaler Einflüsse ergeben. Die Modelle werden dabei aus Beobachtung und Aufzeichnung der Ströme über einen charakteristischen und repräsentativen Zeitraum durch Bildung von Gangkurven gewonnen. Letztere können als diskrete Folge von Stromwerten oder als Parameterkurve ausgeprägt sein, welche den Verlauf des Stromes in Abhängigkeit von der Zeit modellhaft darstellen.

Zur Berücksichtigung von Sondereinflüssen, welche im Modell nicht erfasst sind, wird im Betrieb nicht das rohe Modell selbst zur Vorhersage benutzt. Vielmehr werden die bis zum aktuellen Zeitpunkt gemessenen Werte der Ströme benutzt, um das Modell daran anzupassen. Durch die Anpassung werden Korrekturfaktoren für das Modell ermittelt, so dass es dem bisher beobachteten Verlauf der Ströme optimal nahe kommt. Mit diesen angepassten Korrekturfaktoren wird das Modell modifiziert und nach der jeweiligen Korrektur für die weitere Vorhersage verwendet.

Ausgehend von dem somit aus Messung und Vorhersage bestimmten Zustrom zum Vorlaufbereich wird nunmehr die Auswerteeinheit eine Vorhersage des Zustroms $j_A$ zum Abfertigungsbereich anstellen können, indem die Wahrscheinlichkeitsdichtefunktion $p(\tau_v)$ mit dem ermittelten bzw. abgeschätzten Zustrom $j_v$ zum Vorlaufbereich gefaltet wird. In entsprechender Art und Weise wird durch Faltung des so bestimmten Zustroms $j_A$ in den Abfertigungsbereich und einer entsprechend erstellten Wahrscheinlichkeitsdichtefunktion $p(\tau_A)$ eine Vorausbestimmung des Abstroms $j_o$ aus dem Abfertigungsbereich heraus, der auf diese Weise ein Maß für die Abfertigungskapazität der derzeit zur Verfügung stehenden Betriebsmittel ist, bestimmt. Hierbei ist die gewählte Wahrscheinlichkeitsdichtefunktion $p(\tau_A)$ vorzugsweise als Dirac-Funktion auszugestalten, da es sich in vielen Fällen als günstiger erwiesen hat, die momentane Abfertigungszeit als Mittelwert $\overline{\tau}_A$ der gemessenen Abfertigungszeiten eines Intervalls aus der unmittelbaren Vergangenheit anzunehmen. Dies entspricht einer Dirac-Funktions-förmigen Wahrscheinlichkeitsdichtefunktion

$$p(\tau_A)\overline{\tau}_A = \delta(\tau_A - \overline{\tau}_A)$$

In diesem Fall ergibt sich der spezifische Abstrom $j_o$ aus dem Abfertigungsbereich heraus als Quotient der Anzahl der zur Verfügung gestellten Betriebsmittel $N_B$ und der mittleren Abfertigungszeit:

$$j_O(t) = \frac{N_B(t)}{\overline{\tau}_A(t)}$$

Eine wesentliche, für die Optimierung der zur Verfügung zu stellenden Betriebsmittel ist die zur aktuellen Zeit $t_0$ um eine Zeit $\lambda$ in die Zukunft vorausgesagte Länge L der Warteschlange. Diese berechnet sich bei kontinuierlichen Strömen zu

$$L(t_0 + \lambda) = L(t_0) + \int_{t_0}^{t_0+\lambda} (j_A(t) - j_O(t))dt$$

Wobei $L(t_0)$ die zur aktuellen Zeit gemessene Warteschlangenlänge darstellt.

Im Falle diskreter Zustromprozesse können diese wie bereits ausgeführt als Poisson-Prozesse mit $j_A$ und $j_o$ als Raten modellhaft dargestellt werden.

$$P(n_A) = \frac{e^{-j_A \cdot \Delta t}(j_A \cdot \Delta t)^{n_A}}{n_A!} \quad \text{bzw.} \quad P(n_O) = \frac{e^{-j_O \cdot \Delta t}(j_O \cdot \Delta t)^{n_O}}{n_O!}$$

Durch ein Zusammentragen der oben genannten Formeln und gegenseitiges Einsetzen werden sämtliche für die eingangs genannte Kostenformel erforderlichen Parameter zur Verfügung gestellt, so dass eine Optimierung auf diese Art und Weise exakt berechnet werden kann.

Es ergibt sich daraus der Erwartungswert der Warteschlangenlänge zu

$$\langle L \rangle = \frac{j_A}{N \cdot j_O - j_A} \, ,$$

wobei N die Anzahl der eingesetzten Betriebsmittel und $j_o$ der spezifische Abstrom ist, der hier für alle Betriebsmittel als gleich angenommen ist.

Daraus ergibt sich der Erwartungswert der Wartezeit als

$$\langle T \rangle = \frac{L}{j_A} = \frac{1}{N \cdot j_O - j_A}$$

mit dem Erwartungswert der Standardabweichung der Wartezeit von

$$\langle \Delta T \rangle = \frac{\sqrt{N \cdot j_O / j_A}}{N \cdot j_O - j_A} \, .$$

Bei Vorgabe z.B. einer mit einer gegebenen Wahrscheinlichkeit nicht zu überschreitenden Wartezeit kann aus der sich durch den Erwartungswert und die Standardabweichung sich ergebenden Verteilung der Wartezeit die hierfür

minimal erforderliche Anzahl $N_{min}$ der Betriebsmittel bestimmt werden, indem verschiedene werte von n eingesetzt werden und der kleinste Wert, der die Vorgaben noch erfüllt, ausgewählt wird.

Wie bereits erwähnt, kann eine derartige Dienstleistungsumgebung ein Supermarkt sein, wobei es sich bei den Betriebsmitteln in diesem Fall um Kassen handelt. Der Vorlaufbereich ist in diesem Fall der bei Supermärkten übliche Selbstbedienungsbereich, für deren Durchqueren die einzelnen Kunden, deren Eintritt als Zustromereignis in den Vorlaufbereich gewertet wird, unterschiedliche Zeit benötigen. Nach dieser individuell für jede Person unterschiedlichen Zeit betreten die Kunden den Kassenbereich und nehmen zu diesem Zeitpunkt die Betriebsmittel in Form von Kassen in Anspruch. Die Erfindung ist auch für weitere Einrichtungen wie beispielsweise Check-in-Schalter oder auch andere Schaltereinrichtungen verwendbar, bei denen ein derartiger Vorlaufbereich besteht.

Die Erfassung des Zustroms in den Vorlaufbereich und Zustroms $j_v$ in den Vorlaufbereich und $j_A$ in den Abfertigungsbereich wird jeweils mithilfe von Stereo-3D-Messvor-richtungen geleistet, anhand deren erstellter Höhenkarten die Auswerteinrichtung den Zutritt von Personen erkennen und eine Bestimmung des Zustroms vornehmen kann. Hierbei sind im Abfertigungsbereich mit Vorteil die Erfassungsmittel derart ausgerichtet, dass sowohl die Warteschlangen vor den einzelnen Kassen überblickt werden, als auch ein davor gelagerter Kassenbereich, bei dessen Betreten davon ausgegangen werden kann, dass ein Rücklauf in den Vorlaufbereich nicht mehr zu erwarten ist. Aufgrund einer solchen Einrichtung, welche die Personen individuell identifizieren und gleichzeitig deren Bewegungsrichtung erfassen kann, ist es gleichzeitig möglich, die Warteschlangenlänge aktuell zu bestimmen, wie auch den Zustrom zu erfassen. Durch die Anordnung mehrerer Erfassungsmittel können eine Vielzahl von Kassen bzw. ein größerer Kassenbereich überdeckt werden.

Ergänzend zur optischen Bestimmung der Abfertigungsrate nach dem oben beschriebenen Verfahren ist es auch möglich, zusätzlich zur Verfügung stehende Messwerte, wie beispielsweise die Information, welche Zeit zwischen zwei Bondrucken an der Kasse verstrichen ist, zur Verifizierung bzw. Verbesserung des Vorhersageergebnisses zu nutzen. Darüber hinaus kann über das Warenwirtschaftssystem eine Verbesserung der Abschätzung der Durchlaufzeiten, welche im Durchschnitt für das Sammeln statistisch durchschnittlicher Warenkörbe erforderlich ist, eine zusätzliche Optimierung erfolgen.

Ebenfalls bereits angesprochen wurde eine alternative Verwendung des vorgestellten Verfahrens für ein Serversystem, beispielsweise einen Online-Recherchendienst. In diesem Fall handelt es sich bei der Dienstleistungsumgebung um ein Serversystem, welches sich in einen Konfigurationsbereich und einen Ausführungsbereich untergliedert. Die einzelnen Betriebsmittel sind hierbei zur Verfügung gestellte oder abgeschaltete bzw. anderweitig verwendete Server, welche für die Abarbeitung von Anfragen der Nutzer bereitgestellt oder abgezogen werden. Mehr noch als im Supermarkt ist es an dieser Stelle sehr wichtig, im Internet- und Dienstleistungsbereich eine akzeptable Geschwindigkeit sicherzustellen, da hier die Erwartungen deutlich höher und die Abbruchwahrscheinlichkeit wesentlich signifikanter ist.

Die vorstehend beschriebene Erfindung wird im Folgenden anhand eines Ausführungsbeispiels näher erläutert.

Es zeigen

Figur 1     einen Grundriss eines Supermarktes, in welchem das erfindungsgemäße Verfahren umgesetzt wird, sowie

Figur 2     eine schematische Darstellung eines die Erfindung benutzenden Serversystems.

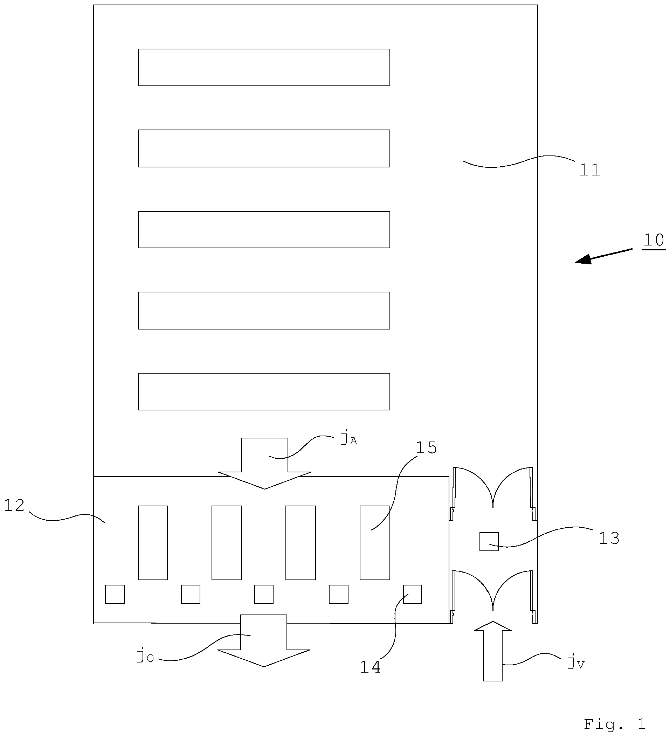

Figur 1 zeigt einen Grundriss eines Supermarktes 10, welcher im vorliegenden Falle eine Dienstleistungsumgebung darstellt. Grundsätzlich ist der Supermarkt 10 unterteilt in einen Selbstbedienungsbereich 11, welcher einen Vorlaufbereich darstellt, sowie einen Kassenbereich 12 als Abfertigungsbereich der Dienstleistungsumgebung. Im Bereich des Zugangs zum Selbstbedienungsbereich 11 sind erste Erfassungsmittel 13 angeordnet, wobei es sich bei diesen Erfassungsmitteln um wenigstens eine Stereo-3D-Messvorrichtung handelt. Mithilfe dieser Stereo-3D-Messvorrichtung im Eingangsbereich wird durch bildgebende Verfahren und der Auswertung dieser Bilder ein Zustrom $j_v$ zum Vorlaufbereich erfasst. Nach Abschluss des Einkaufs wird eine durch den Supermarkt 10 laufende Person sich in Richtung des Kassenbereichs 12 begeben, in dem wiederum zweite Erfassungsmittel 14 so angeordnet sind, dass diese sowohl die Kassen 15 als auch den Übergangsbereich in den Kassenbereich 12 überblicken. Aufgrund der oben genannten bildgebenden Verfahren ermittelt eine zentrale Auswerteeinheit anhand der Messwerte der Erfassungsmittel 13, 14 den aktuellen Zustrom $j_A$ in den Abfertigungsbereich der Kassen 15. Ebenfalls wird aufgrund dieser Informationen ein aktueller Abstrom $j_o$ aus dem Abfertigungsbereich gemessen.

Nachdem eine Messung aktueller Werte und einer daraufhin gerichteten Entscheidung zur Öffnung weiterer Kassen 15 oder deren Schließung zu sehr stark schwankenden Ergebnissen führen würde, wird vonseiten der hier nicht näher dargestellten Auswerteeinheit aufgrund der gemessenen Werte eine Vorhersage künftiger Zuströme $j_A$ und Abströme $j_o$, sowie neben einer Messung der Länge L an den Kassen 15 befindlicher Warteschlangen auch deren Vorhersage für verschiedene Öffnungsszenarien der vorhandenen Kassen 15 durchgeführt. Hierzu wird anhand der Messwerte des Zustroms $j_v$ in den Vorlaufbereich und des Zustroms $j_A$ in den Abfertigungsbereich eine Wahrscheinlichkeitsdichtefunktion berechnet, aufgrund derer eine Vorhersage künftiger Zuströme $j_A$ in den Abfertigungsbereich bestimmt werden kann. Entsprechend wird eine Wahrscheinlichkeitsdichtefunktion für die Abfertigung an den Kassen 15 berechnet, so dass auch der Abstrom $j_O$ aus dem Abfertigungsbereich heraus aufgrund dieser Wahrscheinlichkeitsdichtefunktion und dem Zustrom $j_A$ in den Abfertigungsbereich voraus bestimmt werden kann. Anhand der aktuellen Länge L der Warteschlange und der künftigen Zuströme $j_A$ und Abströme $j_O$ kann in verschiedenen Szenarien die künftige Länge L der Warteschlange an den Betriebsmitteln, sprich den Kassen 15, vorausbestimmt werden. Anhand dieser Information gibt die Auswerteeinheit unter Berücksichtigung der sich aus den Berechnungen abzeichnenden Trends Vorgaben für das weitere Öffnen bzw. Schließen von Kassen 15 zu künftigen Zeitpunkten.

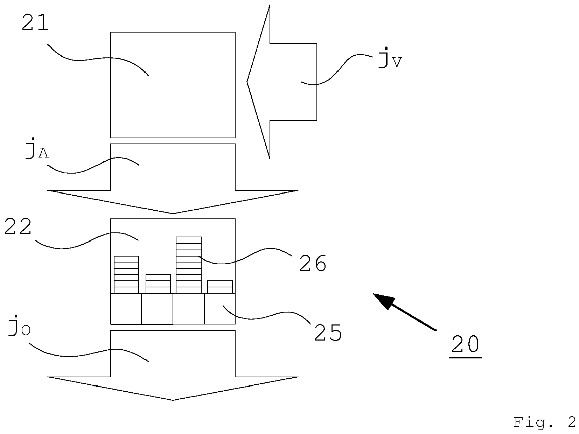

Figur 2 zeigt ein analog funktionierendes Serversystem, welches beispielsweise in dieser Form für ein Online-Recherchen-Tool Einsatz finden könnte. Das gezeigte Serversystem 20 ist unterteilt in einen Konfigurationsbereich 21 und einen Ausführungsbereich 22. In dem Konfigurationsbereich 21 werden zunächst die Recherchenparameter zusammengesetzt, wonach bereits absehbar ist, dass ein Übergang in den Ausführungsbereich 22, also ein Start der Recherche, stattfinden wird. Ebenfalls in Analogie zum vorher genannten Supermarkt-Beispiel sind auch hier Warteschlangen 26 vorhanden, welche von den Servern 25 abgearbeitet werden müssen. Anhand der Zuströme zum Vorlaufbereich bzw. zum Abfertigungsbereich $j_V$ und $j_A$, wird auch hier eine Wahrscheinlichkeitsdichtefunktion für die Durchlaufdauer durch den Konfigurationsbereich 21 bestimmt, sowie unter weiterer Hinzunahme der Werte des Abstroms $j_O$ aus dem Abfertigungsbereich heraus eine Wahrscheinlichkeitsdichtefunktion für den Durchlauf durch den Ausführungsbereich 22 bzw. Abfertigungsbereich des Serversystems 20. In analoger Weise lässt sich hierdurch vonseiten einer auch hier vorhandenen Auswerteeinheit, welche die ermittelten Daten sammelt und auswertet, die künftige Länge der Warteschlangen 26 vorhersagen und eine Optimierung des Betriebsmitteleinsatzes erreichen. Hierbei ist im Serversystem 20 der zusätzliche Vorteil gegeben, dass die Durchlaufzeiten und Abfertigungszeiten aufgrund der durchgehenden Adressierung der einzelnen Nutzer leichter nachzuvollziehen ist und daher die Erhebung über die individuellen Durchlaufzeiten exakter durchführbar sind, als dies im Supermarkt bei einer anonymen Zählung der Fall ist.

Vorstehend beschrieben wurde somit ein Verfahren zur Optimierung des Einsatzes von Betriebsmitteln in einer Dienstleistungsumgebung, wobei diese Dienstleistungsumgebung im Wesentlichen in einen Vorlaufbereich und einen Abfertigungsbereich unterteilt wurde. Aufgrund dieser Zwischenstufe ist eine wesentlich exaktere Abschätzung künftiger Zu-und Abströme aus den einzelnen Bereichen bzw. in die einzelnen Bereiche hinein ermöglicht, welche einen wesentlich exakteren Optimierungsvorgang über den Einsatz der Betriebsmittel erlauben.

BEZUGSZEICHENLISTE

| | |
|---|---|
| 10 | Supermarkt (Dienstleistungsumgebung) |
| 11 | Selbstbedienungsbereich (Vorlaufbereich) |
| 12 | Kassenbereich (Abfertigungsbereich) |
| 13 | erste Erfassungsmittel |
| 14 | zweite Erfassungsmittel |
| 15 | Kasse (Betriebsmittel) |

| | |
|---|---|
| 20 | Serversystem (Dienstleistungsumgebung) |
| 21 | Konfigurationsbereich (Vorlaufbereich) |
| 22 | Ausführungsbereich (Abfertigungsbereich) |
| 25 | Server (Betriebsmittel) |
| 26 | Warteschlange |

| | |
|---|---|
| $j_V$ | Zustrom zum Vorlaufbereich |
| $j_A$ | Zustrom zum Abfertigungsbereich |
| $j_O$ | Abstrom vom Abfertigungsbereich |

**Patentansprüche**

**1.** Verfahren zur Optimierung des Einsatzes von Betriebsmitteln in einer Dienstleistungsumgebung (10, 20), wobei die Betriebsmittel (15, 25) bei deren Verlassen erfordert werden und wobei ein Zustrom $j_V$ sowie ein Abstrom $j_O$ in die Dienstleistungsumgebung (10, 20) bzw. aus ihr heraus mithilfe elektronischer Erfassungsmittel (13, 14) erfasst und die so ermittelten Daten einer Auswerteeinheit zugeführt werden, welche anhand der von den Erfassungsmitteln (13, 14) zu einem Zeitpunkt ermittelten Daten einen späteren Bedarf an Betriebsmitteln (15, 25) abschätzt, **dadurch gekennzeichnet, dass** die Dienstleistungsumgebung (10, 20) in einen Vorlaufbereich (11, 21) und einen Abfertigungsbereich (12, 22) unterteilt ist und mithilfe der Erfassungsmittel (14) ein Zustrom $j_A$ aus dem Vorlaufbereich (11, 21) in den Abfertigungsbereich (12, 22) sowie die Länge L einer den Betriebsmitteln (15, 25) zugeordneten Warteschlange (26) und/oder eine Wartezeit T bis zur Abfertigung ermittelt wird.

2.  Verfahren gemäß Anspruch 1, **dadurch gekennzeichnet, dass** neben einer Erfassung aktueller Werte der Zustandsgrößen $j_A$ und L, sowie eines Abstroms $j_O$ als weitere Zustandsgröße aus dem Abfertigungsbereich (12, 22) durch die Erfassungsmittel (13, 14) auch eine Vorhersage künftiger Werte dieser Zustandsgrößen $j_A$, $j_O$ und L bzw. T durch die Auswerteeinheit durchgeführt wird.

3.  Verfahren gemäß Anspruch 2, **dadurch gekennzeichnet, dass** die Auswerteeinheit aufgrund der aktuellen und der künftigen Zustandsgrößen $j_A$, $j_O$ und L bzw. T mittels einer Kostenfunktion jeweils eine optimale Anzahl zur Verfügung zu stellender Betriebsmittel (15, 25) bestimmt und hieraus eine Änderungsvorgabe für das zusätzliche Bereitstellen oder Abziehen von Betriebsmitteln (15, 25) erstellt.

4.  Verfahren gemäß Anspruch 3, **dadurch gekennzeichnet, dass** die Auswerteeinheit durch einen Vergleich verschieden weit in der Zukunft liegender, künftiger Werte der Zustandsgrößen $j_A$, jo und L bzw. T einen Trend berechnet und diesen bei der Änderungsvorgabe berücksichtigt.

5.  Verfahren gemäß einem der Ansprüche 3 oder 4, **dadurch gekennzeichnet, dass** die Auswerteeinheit eine Mindestdauer zwischen dem Bereitstellen und dem Abziehen eines Betriebsmittels (15, 25) und/oder eine höchste Länge L bzw. Wartezeit T der den Betriebsmitteln (15, 25) zugeordneten Warteschlange (26) berücksichtigt.

6.  Verfahren gemäß einem der Ansprüche 2 bis 5, **dadurch gekennzeichnet, dass** eine Wahrscheinlichkeitsdichtefunktion $p(\tau_v)$ für eine Verweildauer $\tau_v$ in dem Vorlaufbereich (11, 21) anhand der mittels der Erfassungsmittel (13, 14) ermittelten kontinuierlichen Zuströme $j_v$ in den Vorlaufbereich (11, 21) und $j_A$ in den Abfertigungsbereich (12, 22) durch Entfaltung ermittelt wird.

7.  Verfahren gemäß einem der Ansprüche 2 bis 5, **dadurch gekennzeichnet, dass** eine Wahrscheinlichkeitsdichtefunktion $p(\tau_v)$ für eine Verweildauer $\tau_v$ in dem Vorlaufbereich (11, 21) anhand der mittels der Erfassungsmittel (13, 14) ermittelten diskreten Zuströme $j_v$ in den Vorlaufbereich (11, 21) und $j_A$ in den Abfertigungsbereich (12, 22) durch Bilden und Auflösen eines linearen Gleichungssystems, bedarfsweise durch Singulärwertzerlegung, ermittelt wird.

8.  Verfahren gemäß einem der Ansprüche 2 bis 5, **dadurch gekennzeichnet, dass** die Wahrscheinlichkeitsdichtefunktion $p(\tau_v)$ vorab durch Messung mittels der Erfassungsmittel (13, 14) bestimmt wird, wobei für jeden Eintritt und Austritt in den bzw. aus dem Vorlaufbereich (11, 21) eine individuelle Verweildauer elektronisch erfasst und die Gesamtheit der Messungen zu der Wahrscheinlichkeitsdichtefunktion $p(\tau_v)$ zusammengesetzt wird.

9.  Verfahren gemäß einem der Ansprüche 6 oder 7, **dadurch gekennzeichnet, dass** der Zustrom $j_v$ zum Vorlaufbereich (11, 21) für zukünftige Werte mittels eines Erfahrungsmodells abgeschätzt wird, welches die Auswerteeinheit vorzugsweise zur Laufzeit des Verfahrens anhand gemessener Werte des Zustroms $j_v$ korrigiert.

10. Verfahren gemäß einem der Ansprüche 6 bis 9, **dadurch gekennzeichnet, dass** die Auswerteeinheit die ermittelte Wahrscheinlichkeitsdichtefunktion $p(\tau_v)$ durch eine parametrisierte Funktion ersetzt, welche sie an die ermittelte Wahrscheinlichkeitsdichtefunktion $p(\tau_v)$ annähert.

11. Verfahren gemäß einem der Ansprüche 6 bis 10, **dadurch gekennzeichnet, dass** die Auswerteeinheit eine Vorhersage des Zustroms $j_A$ zum Abfertigungsbereich (12, 22) durch Faltung der zuvor ermittelten Wahrscheinlichkeitsdichtefunktion $p(\tau_v)$ mit dem zuvor ermittelten und/oder abgeschätzten Zustrom $j_v$ zum Vorlaufbereich (11, 21) anstellt.

12. Verfahren gemäß Anspruch 11, **dadurch gekennzeichnet, dass** die Auswerteeinheit eine Vorhersage des Abstroms $j_O$ aus dem Abfertigungsbereich (12, 22) heraus durch Faltung einer Wahrscheinlichkeitsdichtefunktion $p(\tau_A)$ für eine Verweildauer $\tau_A$ in dem Abfertigungsbereich (12, 22) mit dem Zustrom $j_A$ zum Abfertigungsbereich (12, 22) vornimmt.

13. Verfahren gemäß Anspruch 12, **dadurch gekennzeichnet, dass** die Auswerteeinheit eine Vorhersage der Länge $L(t_0+\lambda)$ bzw. der Wartezeit der den Betriebsmitteln (15, 25) zugeordneten Warteschlange (26) im Falle kontinuierlicher Ströme aus der Summe einer aktuellen Länge $L(t_0)$ der Warteschlange (26) und dem Integral der Differenz zwischen Zustrom $j_A$ und Abstrom $j_o$ zum bzw. aus dem Abfertigungsbereich (12, 22) über der Zeit auf dem in die Zukunft gerichteten, betrachteten Zeitintervall $\lambda$.

14. Verfahren gemäß Anspruch 12, **dadurch gekennzeichnet, dass** die Auswerteeinheit eine Vorhersage der Länge $L(t_0+\lambda)$ bzw. der Wartezeit der den Betriebsmitteln (15, 25) zugeordneten Warteschlange (26) im Falle diskreter, stochastischer Ströme mit Hilfe der Warteschlangentheorie auf Grundlage der vorhergesagten Raten der Ströme ermittelt.

15. Verfahren gemäß einem der vorhergehenden Ansprüche, **dadurch gekennzeichnet, dass** es sich bei der Dienstleistungsumgebung um eine Dienstleistungseinrichtung mit Schalter- oder Kassenbereichen, etwa um Supermärkte (10) oder Check-in-Schalter handelt.

16. Verfahren gemäß einem der Ansprüche 14 oder 15, **dadurch gekennzeichnet, dass** es sich bei den Erfassungsmitteln (13, 14) um Bildgeber, vorzugsweise um Stereo-3D-Messvorrichtungen, handelt, anhand deren Bilder die Auswerteeinrichtung einzelne Personen und deren Bewegungsrichtung ermittelt und welche Zugänge zum Vorlaufbereich (11) sowie einen Übergangsbereich zum Abfertigungsbereich (12), sowie Warteschlangen vor den Kassen (15) bzw. Schaltern überblicken.

17. Verfahren gemäß einem der Ansprüche 14 bis 16, **dadurch gekennzeichnet, dass** an den Kassen (15) bzw. Schaltern für die Abfertigung verwendete Geräte für die Erfassung eines Abstroms $j_o$ aus dem Abfertigungsbereich (12) herangezogen oder berücksichtigt werden.

18. Verfahren gemäß einem der Ansprüche 1 bis 13, **dadurch gekennzeichnet, dass** es sich bei der Dienstleistungsumgebung um ein Serversystem (20), etwa um einen Online-Recherchendienst, handelt.

Fig. 1

Fig. 2

Europäisches
Patentamt
European
Patent Office
Office européen
des brevets

**EUROPÄISCHER RECHERCHENBERICHT**

Nummer der Anmeldung

EP 12 15 6811

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2008/059274 A1 (HOLLIDAY STUART [GB]) 6. März 2008 (2008-03-06) * Absatz [0043] - Absatz [0051]; Abbildungen 5,6 * ----- | 1-18 | INV. G06K9/00 |
| X | DE 10 2009 028604 A1 (BOSCH GMBH ROBERT [DE]) 24. Februar 2011 (2011-02-24) * Zusammenfassung * ----- | 1-18 | |
| A | WO 2006/135976 A1 (BEONIC CORP PTY LTD [AU]; COHEN PETER GEOFFREY [AU]) 28. Dezember 2006 (2006-12-28) * Zusammenfassung * ----- | 1-18 | |

RECHERCHIERTE SACHGEBIETE (IPC)

G06Q
G06K

Der vorliegende Recherchenbericht wurde für alle Patentansprüche erstellt

| Recherchenort | Abschlußdatum der Recherche | Prüfer |
|---|---|---|
| München | 13. Juni 2012 | Weidmann, Matthias |

EPO FORM 1503 03.82 (P04C03)

**EP 2 492 842 A1**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-06-2012

| Im Recherchenbericht angeführtes Patentdokument | Datum der Veröffentlichung | Mitglied(er) der Patentfamilie | Datum der Veröffentlichung |
|---|---|---|---|
| US 2008059274 A1 | 06-03-2008 | US 2008059274 A1<br>US 2010268564 A1 | 06-03-2008<br>21-10-2010 |
| DE 102009028604 A1 | 24-02-2011 | DE 102009028604 A1<br>EP 2467801 A1<br>WO 2011020641 A1 | 24-02-2011<br>27-06-2012<br>24-02-2011 |
| WO 2006135976 A1 | 28-12-2006 | CA 2612777 A1<br>CN 101273376 A<br>JP 2008544379 A<br>US 2010036706 A1<br>WO 2006135976 A1 | 28-12-2006<br>24-09-2008<br>04-12-2008<br>11-02-2010<br>28-12-2006 |

EPO FORM P0461

Für nähere Einzelheiten zu diesem Anhang : siehe Amtsblatt des Europäischen Patentamts, Nr.12/82

15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0772837 B1
- DE 69505137 T2

- DE 102006000495 A1